# EUROPEAN PATENT APPLICATION

(11) **EP 4 378 582 A1**
(43) Date of publication of application: **05.06.2024**
(21) Application number: 22865030.5
(22) Date of filing: 30.08.2022
(51) Int. Cl.: B01J 37/02, B01J 37/00, B01J 37/04, B01J 37/06, B01J 37/08, B01J 37/16, B01J 23/755, B01J 21/02

(54) **METHOD FOR PREPARING CATALYST FOR AMMONIA DECOMPOSITION USING CATION-ANION DOUBLE HYDROLYSIS**

(30) Priority: 02.09.2021 KR 20210117072
(71) Applicant: Korea Research Institute of Chemical Technology, Daejeon 34114 (KR)
(72) Inventor: CHAE, Ho Jeong, Daejeon 34114 (KR); KIM, Youngmin, Daejeon 34114 (KR); KIM, Jeong-Rang, Daejeon 34114 (KR); CUONG, Do Quoc, Daejeon 34114 (KR); KIM, Geo Jong, Daejeon 34114 (KR); KIM, Tae Wan, Daejeon 34114 (KR)
(74) Representative: Isarpatent
(86) International application number: PCT/KR2022/012982
(87) International publication number: WO 2023/033528

(57) **Abstract**

The present invention pertains to: a method for preparing a catalyst for ammonia decomposition using cation-anion double hydrolysis; the catalyst; and a method for producing hydrogen through ammonia decomposition using the catalyst, wherein a catalyst for ammonia decomposition for hydrogen production, in which nickel (Ni) is supported on an aluminum oxide support or an aluminum composite oxide support doped with a promoter metal (M), is prepared using a ONE POT cation-anion double hydrolysis (CADH) method.

## Description

### Technical Field

The present disclosure relates to a method of preparing a catalyst for ammonia decomposition using cation-anion double hydrolysis and, more specifically, to a method of preparing a Ni/AlMₐOₓ catalyst for ammonia decomposition using a one-pot cation-anion double hydrolysis (CADH) method, the catalyst in which nickel (Ni) is supported on aluminum oxide or an aluminum composite oxide support doped with a predetermined metal as a promoter.

### Background Art

Hydrogen has received considerable attention as a next-generation clean energy source due to high gravimetric energy and zero carbon emissions. However, industrialization and commercialization of hydrogen as an energy source are challenging due to the low volumetric energy density, low boiling point, and difficulties in handling (transportation and storage).

Such problems can be overcome through on-site hydrogen production in which hydrogen carriers are used to easily transport hydrogen to consumption areas and subjected to modification or decomposition. Ammonia is known to be an excellent hydrogen carrier candidate among various hydrogen carriers because the production costs are low, the volumetric and gravimetric energy densities are high, liquefaction is easy, the molecular storage medium is clean, and the catalytic decomposition thereof into carbon-free hydrogen is possible.

Nowadays, the catalytic decomposition of ammonia has become one of the promising approaches for hydrogen production, and a great deal of effort is being made to develop highly efficient catalysts for this reaction. According to research, although the best catalyst system for ammonia decomposition at low temperatures is currently based on ruthenium (Ru), a precious metal, ruthenium has limited applicability in large-scale processes due to being rare and expansive.

As a result, in response to a growing demand for low-cost catalyst systems, the research and development of cheaper, more active, and more stable catalysts have recently received a great deal of attention. In this regard, nickel (Ni)-based catalysts show better performance than other catalysts based on non-precious metals and thus are proposed as an excellent alternative for ammonia decomposition.

It is well known that the physicochemical properties and performance of Ni-based catalysts greatly depend on the nature and synthesis process of supports. Regarding the support material, supports having high surface area, alkalinity, thermal stability, and electron mobility are typically used in ammonia decomposition reactions. While various single metal oxides (i.e., Al₂O₃, CeO₂, La₂O₃, MgO, SiO₂, TiO₂, Y₂O₃, ZiO₂, and the like) have been used as supports in Ni-based catalysts for ammonia decomposition, Al₂O₃ is known to be one of the most effective catalysts.

Additionally, due to the large surface area (200 m²/g), thermal stability, and economic feasibility, Al₂O₃ is used as a support mainly used in catalysts for ammonia decomposition.

On the other hand, modification of Ni/Al₂O₃ catalysts with the introduction of appropriate amounts of promoters is one way of further improving catalytic performance, which proves that the addition of rare-earth elements can accelerate a rate-limiting step in ammonia decomposition reactions. In the case of cerium (Ce), an abundant rare-earth metal, the valence pair of oxides thereof is reversible (Ce⁴⁺/Ce³⁺). Thus, cerium serves as an excellent support/promoter for a wide range of catalysts in ammonia decomposition reactions. Additionally, it has been reported that the combination of Ce and Ni/Al₂O₃ catalysts can improve both catalytic activity and stability for ammonia decomposition [Non-Patent Documents 1 and 2]. However, the promoting effect of Ce addition and methods of doping Al₂O₃ frameworks of Ni-based catalysts with Ce have not yet been studied sufficiently.

On the other hand, there are currently a variety of synthetic techniques for preparing Ni/Al₂O₃ catalysts, including deposition precipitation (DP), wet impregnation (WI), co-precipitation (CP), and solution combustion (SC). In the case of catalysts prepared by the method of DP or WI, thermal sintering of Ni typically occurs, and the catalytic activity is highly dependent on the nature of the support. Although the CP method has some advantages in terms of thermal stability, the use of basic precipitants may raise concerns about environmental pollution. The SC method is an effective technology for preparing uniform and highly dispersed catalysts, but the use of organic fuels such as urea, alcohol, and glycine may inevitably result in a waste of reagents.

Therefore, the development of new synthesis technologies that meet the above requirements is necessary for industrial applications. In this context, the one-pot cation-anion double hydrolysis (CADH) method, which has been conventionally applied for the preparation of thermally stable mesoporous γ-Al₂O₃, has the following outstanding advantages: the use of inexpensive Al₂O₃ sources, a simple synthesis procedure, rapid hydrolysis of Al₂O₃ precursors, large surface area, and basic surface properties of the derived Al₂O₃.

In the present disclosure, it was confirmed that a Ni-based catalyst for ammonia decomposition, which is a Ni-based catalyst prepared by cation-anion double hydrolysis (CADH), showed high performance in ammonia decomposition reactions, thereby completing the present disclosure.

### [Document of related art]

### [Non-Patent Document]

(Non-Patent Document 1) W. Zheng, J. Zhang, Q. Ge, H. Xu, W. Li, Effects of CeO2 addition on Ni/Al2O3 catalysts for there action of ammonia decomposition to hydrogen, Appl. Catal.B80 (2008) 98-105.
(Non-Patent Document 2) P. Vacharapong, S. Arayawate, S. Henpraserttae, S. Katanyutanon, S. Charojrochkul, L. Lawtrakul, P. Toochinda, Effect of Magnetic Inducement in Preparation of Ni/Ce-doped Al2O3 for Ammonia Decomposition, ChemistrySelect 4 (2019) 11913-11919.
(Non-Patent Document 3) Peng Jiang, Jinxian Zhao, Yahong Han, Xuhui Wang, Yongli Pei, Zhilei Zhang, Yongmei Liu, and Jun Ren*, Highly Active and Dispersed Ni/Al2O3 Catalysts for CO Methanation Prepared by the Cation-Anion Double-Hydrolysis Method: Effects of Zr, Fe, and Ce Promoters, Ind. Eng. Chem. Res. 2019, 58, 27, 11728-11738

### Disclosure

### Technical Problem

The present disclosure aims to provide a catalyst having high catalytic activity in ammonia decomposition reactions, the catalyst being a Ni/AlMₐOₓ in which nickel (Ni) is supported on aluminum oxide or an aluminum composite oxide support doped with a predetermined metal as a promoter.

Additionally, in preparing the catalyst having high catalytic activity in the ammonia decomposition reactions as described above, the present disclosure aims to provide a method of preparing a Ni/AlMₐOₓ catalyst having high catalytic activity in ammonia decomposition reactions using a one-pot cation-anion double hydrolysis (CADH) method.

### Technical Solution

To solve the problems described above, a method of preparing a catalyst for ammonia decomposition using cation-anion double hydrolysis, according to one embodiment of the present disclosure, is characterized in that a catalyst for ammonia decomposition to produce hydrogen, in which nickel (Ni) is supported on aluminum oxide or an aluminum composite oxide support doped with a promoter metal (M), is prepared using a one-pot cation-anion double hydrolysis (CADH) method, wherein the promoter metal (M) is a lanthanum-based metal, yttrium (Y), manganese (Mn), or magnesium (Mg).

Additionally, as one example of the present disclosure, the aluminum composite oxide support is characterized in that a molar ratio (M/Al) of the promoter metal (M) to aluminum (Al) is in a range of 0.005 to 0.2.

Additionally, as one example of the present disclosure, a nickel (Ni) content in the ammonia catalyst is characterized by being in a range of 10 to 60 wt%.

Additionally, as one example of the present disclosure, the method of preparing the catalyst for ammonia decomposition using cation-anion double hydrolysis is characterized by including: (a) preparing a solution of a nickel precursor and an aluminum precursor; (b) mixing the nickel precursor and the aluminum precursor, prepared in (a), to prepare a mixed solution and then adjusting a pH value thereof using a pH adjuster; (c) stirring the mixed solution prepared in (b) while performing cation-anion double hydrolysis to obtain a precipitate; (d) filtering, washing, and drying the precipitate obtained in (c); (e) calcining the precipitate dried in (d); and (f) reducing the precipitate calcined in (e) .

Additionally, as one example of the present disclosure, in (a), a promoter metal precursor may be further prepared, and in (b), a mixed solution of the nickel precursor, the aluminum precursor, and the promoter metal precursor may be prepared, and a pH value thereof is adjusted, wherein the promoter metal (M) may be one or more selected from among cerium (Ce), lanthanum (La), yttrium (Y), manganese (Mn), or magnesium (Mg).

In the present disclosure, the calcining in (e) may be performed in an air atmosphere, or may be performed in a temperature range of 450°C to 600°C.

Additionally, as one example of the present disclosure, the reducing in (f) is characterized by being performed in a temperature range of 500°C to 700°C.

Additionally, a catalyst for an ammonia decomposition reaction as one embodiment of the present disclosure is prepared by a one-pot cation-anion double hydrolysis (CADH) method and is represented by a formula of Ni/AlMₐOₓ (where in the formula, M is selected from among a lanthanide metal, yttrium (Y), manganese (Mn), or magnesium (Mg), and a is in a range of 0 to 0.2).

Additionally, as one example of the present disclosure, a Ni content is characterized by being in a range of 10 to 60 wt%.

Additionally, the present disclosure provides a method of producing hydrogen by decomposing ammonia, the method being characterized by using a catalyst prepared according to the catalyst preparation method of the present disclosure or a catalyst for ammonia decomposition reaction according to the present disclosure.

### Advantageous Effects

A Ni/AlMₐOₓ catalyst for ammonia decomposition of the present disclosure, prepared by using one-pot cation-anion double hydrolysis (CADH) method of the present disclosure, can show outstanding catalytic performance for ammonia decomposition compared to Ni/AlMₐOₓ catalysts prepared by other methods.

### Description of Drawings

FIG. 1 shows Ni specific surface area at different pH values for Ni/Al₂O₃ prepared by a CADH method while varying pH;
FIG. 2 shows catalytic activity data for ammonia decomposition of Ni/Al₂O₃ prepared by a CADH method while varying pH;
FIG. 3 shows catalytic activity data for ammonia decomposition of 10Ni/Al₂O₃ catalysts prepared using different catalyst preparation methods;
FIG. 4 shows catalytic activity data for ammonia decomposition of Ni/AlMₐOₓ catalysts with different promoter metals prepared according to a method of one example of the present disclosure;
FIG. 5 shows catalytic activity data for ammonia decomposition of 10Ni/Al₁MₐOₓ catalysts (where M is Ce or La) with varying molar ratios of Ce and La to Al prepared according to a method of one example of the present disclosure;
FIG. 6 shows catalytic activity data for ammonia decomposition of 10Ni/Al₁Ce_{0.05}Oₓ catalysts prepared by varying catalyst preparation methods;
FIG. 7 shows data for N₂ adsorption-desorption isotherm (7A) and pore size distribution (7B) of 10Ni/Al₁Ce_{0.05}Oₓ catalysts prepared by varying catalyst preparation methods;
FIG. 8 shows data demonstrating the impact of calcination atmosphere (8A), calcination temperature (8B), reduction temperature (8C), and NH₃ GHSV (8D) on the catalytic activity of a 20Ni/Al₁Ce_{0.05}Oₓ catalyst prepared according to a method of one example of the present disclosure; and
FIG. 9 shows stability test data for a 20Ni/Al₁Ce_{0.05}Oₓ catalyst prepared according to a method of one example of the present disclosure.

### Mode for Invention

Unless defined otherwise, all terms including technical and scientific terms used herein have the same meaning as commonly understood by those skilled in the art to which the present disclosure belongs. In general, the nomenclature used herein is well-known and commonly used in the art.

Unless the context clearly indicates otherwise, it will be further understood that the terms "comprises", "comprising", "includes", and/or "including", when used herein, specify the presence of stated features, integers, steps, operations, elements, and/or components, but do not preclude the presence or addition of one or more other features, integers, steps, operations, elements, components, and/or groups thereof.

The present disclosure relates to a Ni/AlMₐOₓ catalyst and a method of preparing the same, in which the catalyst is characterized by being prepared using a one-pot cation-anion double hydrolysis (CADH) method.

In the Ni/AlMₐOₓ catalyst for ammonia decomposition according to the present disclosure, M is one selected from among a lanthanum-based metal, including cerium (Ce) and lanthanum (La), yttrium (Y), manganese (Mn), or magnesium (Mg), which is preferably a lanthanum-based metal and more preferably cerium or lanthanum. Additionally, a may be in a range of 0 to 0.2, which is preferably in the range of 0.01 to 0.15, more preferably in the range of 0.01 to 0.1, and most preferably in the range of 0.02 to 0.08. The Ni content in the catalyst may be in a range of 10 to 60 wt%, which is preferably in the range of 15 to 50 wt% and more preferably in the range of 20 to 40 wt%.

The method of preparing the Ni/AlMₐOₓ catalyst using the one-pot cation-anion double hydrolysis (CADH) method, according to the present disclosure, is characterized by including the following steps: (a) dissolving nickel precursor and an aluminum precursor separately in deionized water; (b) mixing the resulting solution in which the nickel precursor and the aluminum precursor are dissolved, prepared in step (a), to prepare a mixed solution and then adjusting a pH value thereof using a pH adjuster; (c) stirring the mixed solution prepared in step (b) in a room temperature range while performing cation-anion double hydrolysis to obtain a precipitate; (d) filtering, washing, drying, and grinding the precipitate obtained in step (c); (e) calcining the precipitate ground in step (d); and (f) reducing the precipitate calcined in step (e).

In step (a), a promoter metal precursor solution may be further prepared, and in step (b), a mixed solution in which the promoter metal precursor solution is further mixed may be prepared. In this case, the promoter metal is one or more selected from among a lanthanum-based metal, including cerium (Ce) and lanthanum (La), yttrium (Y), manganese (Mn), or magnesium (Mg).

As the promoter metal precursor and the nickel precursor, sulfates, nitrates, acetates, carbonates, oxalates, citrates, halides, hydroxides, oxyhydroxides, or the like of the promoter metal or nickel may be used. Despite not being particularly limited as long as they are soluble in water, the promoter metal precursor and nickel precursor are preferably nitrates.

As the aluminum precursor, NaAlO₂ is used.

In step (a), each solution of the nickel precursor, the aluminum precursor, and the promoter metal precursor may be prepared separately by being dissolved in water but may be prepared as one solution.

In step (b), the resulting solution prepared in step (a) is mixed to prepare the mixed solution, and the pH value thereof is adjusted. In this case, the solution is preferably mixed by adding the nickel precursor and/or the promoter metal precursor to the aluminum precursor. More preferably, the mixed solution is prepared by adding the nickel precursor and/or the promoter metal precursor dropwise to the aluminum precursor solution.

The pH adjuster in step (b) may be an acid or basic substance, and nitric acid is preferably used as the acidic substance.

The pH adjusted in step (b) may be in a range of 9 to 12.5 and is preferably in the range of 10 to 12. When the pH of this solution is lower than 9 or higher than 12.5, the ammonia decomposition activity of the prepared catalyst may be reduced.

In step (c), the mixed solution is stirred while performing cation-anion double hydrolysis, which may be performed in a temperature range of 20°C to 80°C and is preferably performed at room temperature.

In step (d), the precipitate obtained in step (c) is dried. If necessary, the precipitate may be washed before drying. The washing process may be performed using organic solvents but is preferably performed using water.

In step (e), the dried product obtained in step (d) is calcined. If necessary, the dried product may be ground first, and the ground product may be calcined. The calcining may be performed in a temperature range of 450°C to 600°C in an air atmosphere or inert atmosphere such as nitrogen or argon. However, the calcining is preferably performed in an air atmosphere because the ammonia decomposition activity of the prepared catalyst is accelerated.

In step (f), the precipitate calcined in step (e) is reduced, which may be performed in a temperature range of 500°C to 700°C in an atmosphere of hydrogen or a mixed gas of hydrogen and inert gas.

Additionally, the present disclosure provides a method of producing hydrogen by ammonia decomposition, which is characterized by using a catalyst prepared according to the method of the present disclosure or a catalyst according to the present disclosure.

Hereinafter, the catalytic activities of a Ni/AlMₐOₓ catalyst prepared using a CADH method, which is a catalyst preparation method of the present disclosure, and Ni/AlMₐOₓ catalysts prepared by other preparation methods are to be compared to explain the outstanding characteristics of the Ni/AlMₐOₓ catalyst prepared according to the preparation method of the present disclosure.

In other words, Ni/AlMₐOₓ catalysts are prepared using various synthesis methods with varying promoter metal (M)/Al molar ratios, and the catalytic activities thereof in ammonia decomposition reactions are evaluated to demonstrate that the Ni/AlMₐOₓ catalyst, prepared according to the present disclosure, has higher catalytic activity in ammonia decomposition reactions than catalysts prepared by existing preparation methods.

### <Experimental Example 1: Impact of solution pH on catalyst prepared by CADH methods

### Preparation of catalyst

A catalyst for ammonia decomposition reactions, the catalyst being a Ni/Al₂O₃ catalyst in which Ni was supported on an aluminum oxide (Al₂O₃) support, was prepared using a one-pot CADH method as follows to measure changes in the activity of the prepared catalyst for ammonia decomposition reactions with varying pH during catalyst preparation using the CADH method.

In 50 mL of deionized water, Ni(NO₃)₂·6H₂O as a Ni precursor and NaAlO₂ as an aluminum precursor were dissolved separately in an appropriate ratio. Then, the nitrate precursor solution was added dropwise to the aluminum precursor solution being stirred. The pH of the resulting mixed solution was adjusted to a predetermined value within the range of 6.0 to 12.5 using 1 M HNO₃. In this case, the ratio of the Ni source to the Al source was adjusted to set the Ni content in the ultimately prepared Ni/Al₂O₃ catalyst to 10 wt%. The subsequent hydrolysis and aging processes were performed at a temperature of 25°C for 20 hours with vigorous stirring, followed by obtaining the resulting precipitate through filtration. Then, the obtained precipitate was washed thoroughly with deionized water and ethanol. The sample was dried at a temperature of 100°C, ground, and then calcined in a muffle furnace (Vulcan 3-550, Neytech, USA) at a temperature of 600°C for 5 hours at a ramp rate of 3°C/min in an air atmosphere.

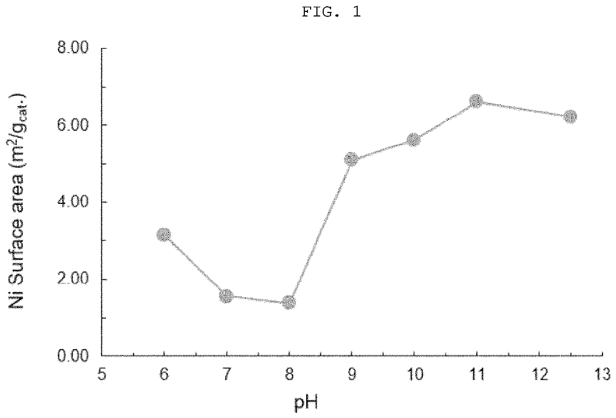

The Ni and Na contents in the prepared catalyst were measured using inductively coupled plasma-optical emission spectroscopy (Agilent 720 ICP-EOS, Agilent, USA). Additionally, Ni dispersion, Ni specific surface area, and Ni crystallite size were each independently measured by H₂ chemisorption analysis and H₂ TPR. The results thereof are shown in Table 1, and the Ni specific surface area is also shown in FIG. 1.

### Ammonia decomposition reaction

NH₃ decomposition of the prepared catalyst was evaluated at atmospheric pressure in a tubular continuous-flow quartz fixed-bed reactor equipped with a thermocouple. In typical reactions, 0.1 g of the catalyst sample was loaded onto the quartz surface layer inside the reactor, heated to a temperature of 600°C at a rate of 4°C/min under a continuous flow of pure H₂ (30 mL/min), and kept at the same temperature for 2 hours. Afterward, the sample was cooled to a temperature of 300°C in an argon atmosphere (10 mL/min). Next, pure gas NH₃ (10 mL/min) corresponding to a gas hourly space velocity (GHSV) of 6000 mL/gcat./h was introduced into the reactor.

The catalytic activity was evaluated at varying temperatures ranging from 300°C to 600°C in steps of 50°C (60 minutes at each temperature). The concentration of the outlet gas was monitored using an online gas chromatograph (YL6500GC, YL Instrument Co., Korea) equipped with a thermal conductivity detector (TCD) and Porapak-N and Molesieve 13X columns.

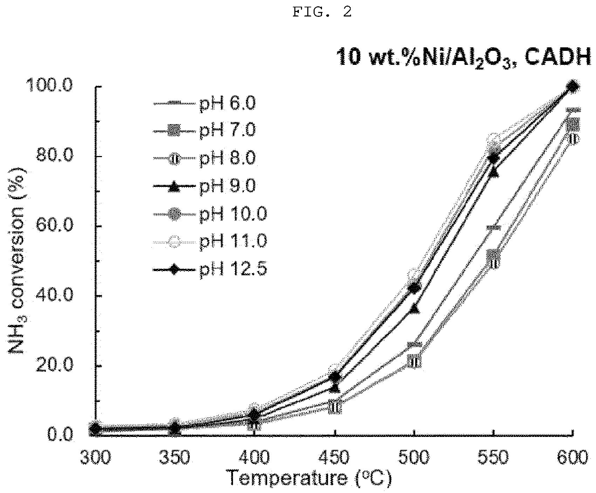

The ammonia conversion rate (%), X_{NH3}, was calculated considering the gas phase volume change under constant reaction temperature and total pressure in the plug-flow system. The results thereof are shown in FIG. 2.

**[Table 1]**

| pH | Ni dispersion (%) | Ni surface area (m²/g) | Crystallite size (nm) | Ni content (wt.%) | Na content (wt.%) |
|---|---|---|---|---|---|
| 6.0 | 4.45 | 3.13 | 22.74 | 10.55 | 0.01 |
| 7.0 | 2.55 | 1.56 | 39.72 | 9.20 | 0.00 |
| 8.0 | 2.10 | 1.38 | 48.11 | 9.86 | 0.00 |
| 9.0 | 7.39 | 5.10 | 13.69 | 10.37 | 0.00 |
| 10.0 | 7.55 | 5.62 | 13.41 | 11.17 | 0.02 |
| 11.0 | 8.38 | 6.62 | 12.08 | 11.86 | 0.10 |
| 12.5 | 5.69 | 6.23 | 17.78 | 16.43 | 0.17 |

According to Table 1 and FIG. 1, it is seen that the size, specific surface area, dispersion rate, and the like of the nickel particles are affected as pH changes.

As shown in FIG. 1, there is a pattern in which the specific surface area of the nickel particles decreases until pH reaches 8.0, rapidly increases at pH 9.0, slowly increases until pH reaches 11.0, and then slightly decreases again at pH 12.5, which is shown to decrease in the following order: pH 11 > pH 12.5 > pH 10 > pH 9 > pH 6 > pH 7 > pH 8. The dispersion rate of the nickel particles exhibits the same trend as in the specific surface area, and the size of the nickel particles exhibits the opposite trend to that in the specific surface area.

The activity of the prepared catalyst for ammonia decomposition reactions exhibited an almost similar trend as in the specific surface area of the nickel particles, but not precisely identical, which is shown to decrease in the following order: pH 11 > pH 10 > pH 12.5 > pH 9 > pH 6 > pH 7 > pH 8.

What is unique here is that the Ni specific surface area values and ammonia decomposition activity do not match at pH 10 and 12.5. Typically, it is expected that the larger the specific surface area of Ni, the higher the catalytic activity, so the ammonia decomposition activity is assumed to be higher at pH 12.5. However, the activity at pH 12.5 was even lower than that at pH 10, where the Ni specific surface area was smaller.

Therefore, in the catalyst preparation by the CADH method according to the present disclosure, it is seen that pH adjustment in the solution may act as an important factor for the activity in ammonia decomposition reactions, indicating that the pH is required to be 12.5 or lower.

### <Experimental Example 2: Impact of catalyst preparation methods

To confirm the impact of preparation methods of Ni/Al₂O₃ serving as a catalyst for ammonia decomposition reactions, catalysts were prepared by cation-anion double hydrolysis (CADH), co-precipitation (CP), and wet impregnation (WI) as follows.

In the case of the CADH method, the catalyst was prepared in the same manner as the catalyst preparation method in Experimental Example 1, except that the pH was set to 10.

In the case of the CP method, Ni(NO₃)₂·6H₂O and Al(NO₃)₃·9H₂O were dissolved in 100 mL of deionized water in an appropriate ratio. Next, a solution of NH₄OH (1 M) was added dropwise with vigorous stirring, and the resulting solution was aged overnight at room temperature, followed by obtaining the resulting precipitate through filtration. Then, the obtained precipitate was washed thoroughly with deionized water and ethanol. The samples were dried overnight in an air oven at a temperature of 100°C, and then ground and calcined under the same conditions as in the above example.

In the case of the WI method, Al₂O₃ powder (Sigma Aldrich, nanopowder, <50 nm) was dispersed in 100 mL of deionized water with vigorous stirring, and then an appropriate amount of Ni(NO₃)₂·6H₂O was added. The resulting mixture was stirred at a temperature of 60°C for 5 hours, and then the solvent was removed by rotary evaporation. Next, the impregnated samples were dried overnight in an air oven at a temperature of 100°C, ground, and then calcined at a temperature of 600°C for 5 hours in an air atmosphere at a ramping rate of 3°C/min.

The Ni content in each of the catalysts prepared by the three methods described above was all set to 10 wt%.

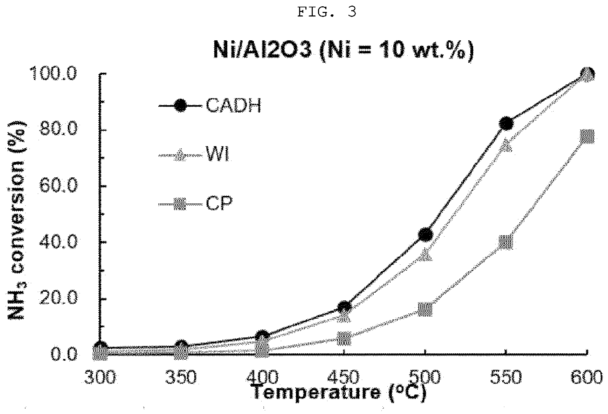

Thereafter, ammonia decomposition reactions were performed in the same manner as in Experimental Example 1, except for using the catalysts prepared in Experimental Example 2. The results thereof are shown in FIG. 3.

As a result of the ammonia decomposition reactions, there was a difference in activity for the ammonia decomposition reactions depending on the catalyst preparation methods, and the catalyst prepared by CADH showed the highest activity (see FIG. 3).

### <Experimental Example 3: Impact of introduction of promoters

To confirm the impact of the introduction of a promoter into Ni/Al₂O₃ serving as a catalyst for ammonia decomposition reactions, Ni/AlMₐOₓ catalysts were prepared as follows. In this case, M refers to a metal used as the promoter.

Catalysts were prepared in the same manner as the catalyst preparation method in Experimental Example 1, except that the nitrate of each promoter metal was dissolved in separate deionized water, in addition to Ni(NO₃)₂·6H₂O as the Ni precursor and NaAlO₂ as the aluminum precursor, the two dissolved solutions were mixed, the mixed solution was added dropwise to the aluminum precursor solution being stirred, and then the pH of the resulting solution was adjusted to 10 using nitric acid, in the catalyst preparation method in Experimental Example 1.

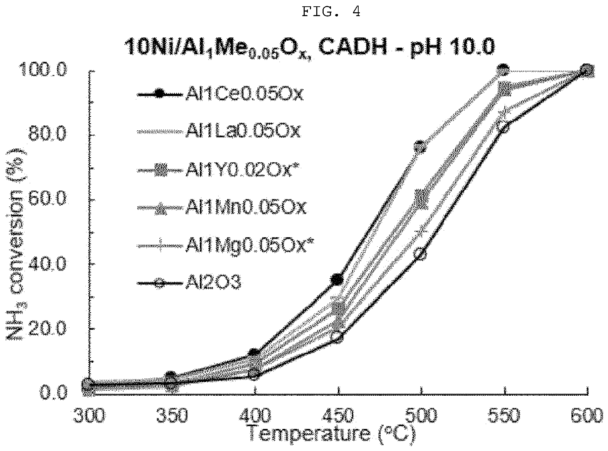

Thereafter, ammonia decomposition reactions were performed in the same manner as in Experimental Example 1, except for using the catalysts prepared in Experimental Example 3. The results thereof are shown in FIG. 4.

When adding Ce, La, Y, Mn, and Mg as the promoters, the efficiency of the ammonia decomposition reactions was further improved. In particular, such an effect was significant at a temperature of 500°C. Additionally, for each promoter metal, the effect was shown to be reduced in the following order: Ce > La > Y > Mn > Mg (based on a reaction temperature of 450°C).

### <Experimental Example 4: Impact of Ni and Ce promoter contents>

A Ni/AlCeₐOₓ catalyst in which Ni was supported on an aluminum composite oxide support doped with cerium (Ce) as the promoter shown to be highly effective in Experimental Example 3 was prepared using a one-pot CADH method as follows.

The catalyst was prepared in the same manner as in Experimental Example 3, except for varying the Ni and Ce contents. The obtained catalyst was denoted as KNi/Al₁CeₐOₓ. In this case, the first letter K represents the weight percentage (wt%) of Ni contained in the sample, and a represents the molar ratio of Ce to Al.

The Ce/Al molar ratio in the prepared catalyst was calculated by ICP-OES analysis, Ni dispersion rate and Ni specific surface area were calculated through H₂ chemisorption, H₂ consumption was calculated on the basis of H₂ TPR, and the oxidation states of Ni and Ce were measured by XPS. The results thereof are shown in Table 2.

**[Table 2]**

| Samples | Ni (wt%) | Ce/Al (mole) | D_{Ni} (%) | S_{Ni} (m²/g) | S_{BET} (m²/g) | H₂ consumption (mmol/g) | %Ni⁰/(Ni⁰ + Ni²⁺) | %Ce³⁺/(Ce³⁺ + Ce⁴⁺) |
|---|---|---|---|---|---|---|---|---|
| 10Ni/Al₂O₃ | 9.6 | 0.00 | 7.01 | 5.21 | 260.58 | 8.12 | 12.78 | - |
| 10Ni/Al₁Ce_{0.01}Oₓ | 9.9 | 0.01 | 8.38 | 6.49 | 308.89 | 6.87 | 11.08 | 43.84 |
| 10Ni/Al₁Ce_{0.02}Oₓ | 9.9 | 0.02 | 7.24 | 5.54 | 293.17 | 9.46 | 14.52 | 45.27 |
| 10Ni/Al₁Ce_{0.05}Oₓ | 9.6 | 0.05 | 5.72 | 4.25 | 274.36 | 14.25 | 19.26 | 52.58 |
| 10Ni/Al₁Ce_{0.10}Oₓ | 9.4 | 0.11 | 5.41 | 3.90 | 273.04 | 19.84 | 14.12 | 43.66 |
| 20Ni/Al₁Ce_{0.05}Oₓ | 19.3 | 0.05 | 7.20 | 10.25 | 245.37 | 23.18 | 15.37 | 59.39 |
| 40Ni/Al₁Ce_{0.05}Oₓ | 38.4 | 0.05 | 7.97 | 20.39 | 238.88 | 38.40 | 11.31 | 71.00 |
| 60Ni/Al₁Ce_{0.05}Oₓ | 52.4 | 0.05 | 4.71 | 16.45 | 192.60 | 42.25 | 9.61 | 50.91 |

Ni/AlMₐOₓ catalysts in which Ni was supported on an aluminum composite oxide support doped with cerium (Ce) or lanthanum (La) as the promoter shown to be highly effective in Experimental Example 3 (where M is Ce or La) were prepared using the one-pot CADH method as follows.

The catalysts were prepared in the same manner as in Experimental Example 3, except for varying the Ni and Ce contents. The obtained catalyst was denoted as KNi/Al₁MₐOₓ (where M is Ce or La). In this case, the first letter K represents the weight percentage (wt%) of Ni contained in the sample, and a represents the molar ratio of Ce to Al.

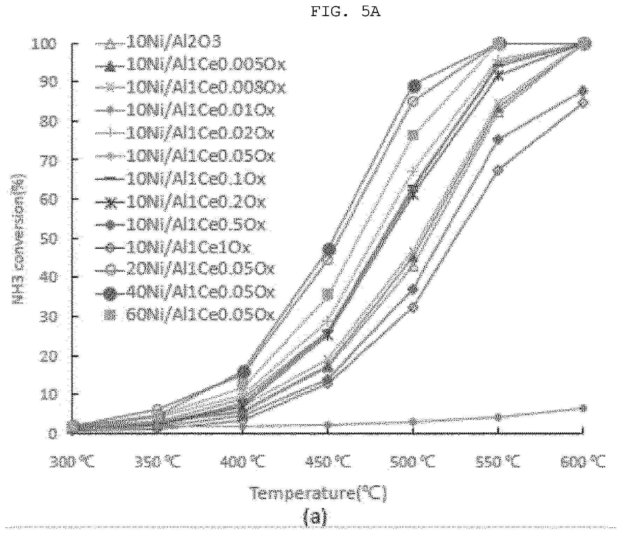

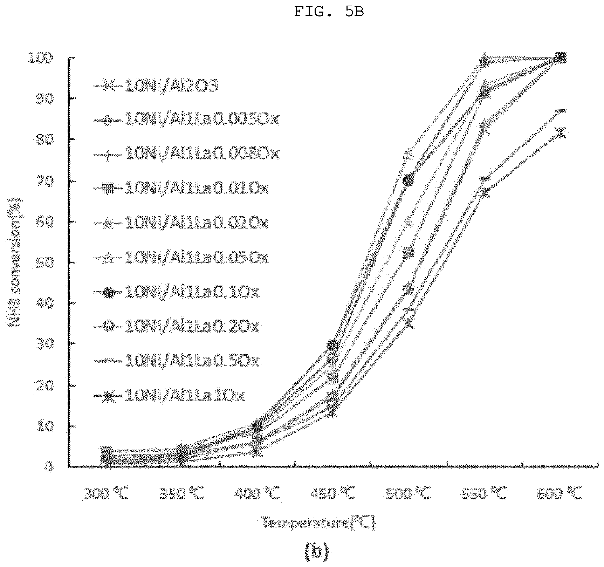

Using the catalysts prepared in such a manner, ammonia decomposition reactions were performed in the same manner as in Experimental Example 1. The results thereof are shown in Table 3 and FIG. 5.

The ammonia conversion rate increased from 42.97% to 76.03% at a temperature of 500°C as the Ce/Al molar ratio increased up to 0.05, but tended to decrease further as the Ce/Al molar ratio increased above 0.1.

Additionally, the ammonia conversion rate increased from 42.97% to 76.29% at a temperature of 500°C as the La/Al molar ratio increased up to 0.05, but tended to decrease further as the Ce/Al molar ratio increased above 0.1.

As a result of H₂ chemisorption (see Table 2), in the case where the Ce/Al molar ratio is 0.01, the highest Ni dispersion and Ni surface area are exhibited when adding a small amount of Ce (Ce/Al = 0.01). Additionally, as the amount of Ce increases, the Ni dispersion and Ni surface area continuously decrease. As described above, the tendency in Ni dispersion and Ni surface area appears to have a low correlation with the ammonia conversion rate, showing that Ni dispersion and Ni surface area are not all factors that control catalytic performance.

The ammonia conversion rate gradually increased as the Ni content increased from 10 wt% to 40 wt%, but then further decreased when the loading amount of Ni further increased. Although H₂ consumption increased in the case where the Ni content was 60 wt%, the ammonia decomposition activity was shown to be more closely related to Ni dispersion, Ni surface area, and surface additive metal ratio (see Table 2).

**[Table 3]**

| Method | Ammonia conversion (%) | | | | | | |
|---|---|---|---|---|---|---|---|
| | 300°C | 350°C | 400°C | 450°C | 500°C | 550°C | 600°C |
| 10Ni/Al₂O₃ | 2.46 | 3.04 | 5.40 | 16.99 | 42.97 | 82.25 | 100 |
| 10Ni/Al₁Ce_{0.005}Oₓ | 1.13 | 3.10 | 5.96 | 17.47 | 45.23 | 83.33 | 100 |
| 10Ni/Al₁Ce_{0.008}O_{X} | 1.32 | 3.12 | 6.88 | 18.95 | 46.69 | 84.52 | 100 |
| 10Ni/Al₁Ce_{0.01}Oₓ | 1.60 | 3.16 | 9.07 | 26.19 | 62.52 | 94.66 | 100 |
| 10Ni/Al₁Ce_{0.02}Oₓ | 1.72 | 4.27 | 9.94 | 28.94 | 66.91 | 95.54 | 100 |
| 10Ni/Al₁Ce_{0.05}Oₓ | 1.25 | 4.85 | 11.79 | 34.94 | 76.03 | 100 | 100 |
| 10Ni/Al₁Ce_{0.1}Oₓ | 1.44 | 2.45 | 7.99 | 26.06 | 63.09 | 93.82 | 100 |
| 10Ni/Al₁Ce_{0.2}Oₓ | 1.38 | 2.18 | 7.03 | 25.27 | 61.12 | 91.49 | 100 |
| 10Ni/Al₁Ce_{0.5}Oₓ | 1.10 | 1.94 | 4.76 | 14.15 | 37.11 | 75.34 | 87.74 |
| 10Ni/Al₁Ce₁Oₓ | 0.76 | 1.25 | 3.63 | 12.96 | 32.49 | 67.52 | 84.56 |
| 20Ni/Al₁Ce_{0.05}Oₓ | 2.07 | 6.06 | 15.30 | 44.49 | 84.91 | 100 | 100 |
| 40Ni/Al₁Ce_{0.05}Oₓ | 1.97 | 4.85 | 16.06 | 47.22 | 89.24 | 100 | 100 |
| 60Ni/Al₁Ce_{0.05}Oₓ | 2.12 | 4.57 | 13.02 | 35.87 | 76.55 | 100 | 100 |
| Al₁Ce_{0.05}Oₓ | 1.71 | 1.82 | 1.81 | 2.41 | 3.09 | 4.11 | 6.77 |
| 10Ni/Al₁La_{0.005}Oₓ | 2.50 | 3.05 | 5.77 | 17.14 | 43.24 | 83.30 | 100 |
| 10Ni/Al₁La_{0.008}Oₓ | 2.81 | 3.07 | 5.93 | 17.86 | 43.70 | 83.79 | 100 |
| 10Ni/Al₁La_{0.01}Oₓ | 3.62 | 4.25 | 8.31 | 21.75 | 52.09 | 91.07 | 100 |
| 10Ni/Al₁La_{0.02}Oₓ | 2.15 | 3.32 | 8.77 | 24.83 | 60.08 | 93.33 | 100 |
| 10Ni/Al₁La_{0.05}Oₓ | 3.55 | 4.49 | 10.79 | 29.43 | 76.29 | 100 | 100 |
| 10Ni/Al₁La_{0.1}Oₓ | 1.62 | 3.15 | 9.97 | 29.69 | 70.06 | 98.71 | 100 |
| 10Ni/Al₁La_{0.2}Oₓ | 1.37 | 2.27 | 9.56 | 26.52 | 69.86 | 91.92 | 100 |
| 10Ni/Al₁La_{0.5}Oₓ | 0.67 | 1.97 | 5.80 | 14.81 | 38.08 | 70.24 | 86.77 |
| 10Ni/Al₁La₁Oₓ | 0.61 | 1.07 | 3.58 | 13.27 | 35.02 | 66.95 | 81.47 |

### <Experimental Example 5: Impact of catalyst preparation method on catalyst with promoter metal introduced>

In Experimental Example 5, to show the impact of the catalyst preparation methods, 10Ni/Al₁Ce_{0.05}Oₓ was prepared by methods of one-pot coprecipitation (CP), wet impregnation after anion-cation double hydrolysis (CADH-WI), and wet impregnation after co-precipitation(CP-WI), in addition to the catalyst prepared by the CADH method according to the present disclosure.

In the case of the CP method, Ni(NO₃)₂·6H₂O, Al(NO₃)₃·9H₂O, and Ce(NO₃)₃·6H₂O were dissolved in 100 mL of deionized water in an appropriate ratio. Next, a solution of NH₄OH (1 M) was added dropwise with vigorous stirring, and the resulting solution was aged overnight at room temperature, followed by obtaining the resulting precipitate through filtration. Then, the obtained precipitate was washed thoroughly with deionized water and ethanol. The samples were dried overnight in an air oven at a temperature of 100°C, and then ground and calcined under the same conditions as in the above example.

In the case of the CADH-WI and CP-WI methods, each of the Al₁Ce_{0.05}Oₓ supports was first prepared under the same conditions as in the CADH and CP methods in the absence of the Ni precursor. Such an obtained Al₁Ce_{0.05}Oₓ support was dispersed in 100 mL of deionized water with vigorous stirring, followed by adding an appropriate amount of Ni(NO₃)₂·6H₂O. The resulting mixture was stirred at a temperature of 60°C for 5 hours, and then the solvent was removed by rotary evaporation. Next, the impregnated samples were dried overnight in an air oven at a temperature of 100°C, ground, and then calcined at a temperature of 600°C for 5 hours in an air atmosphere at a ramping rate of 3°C/min.

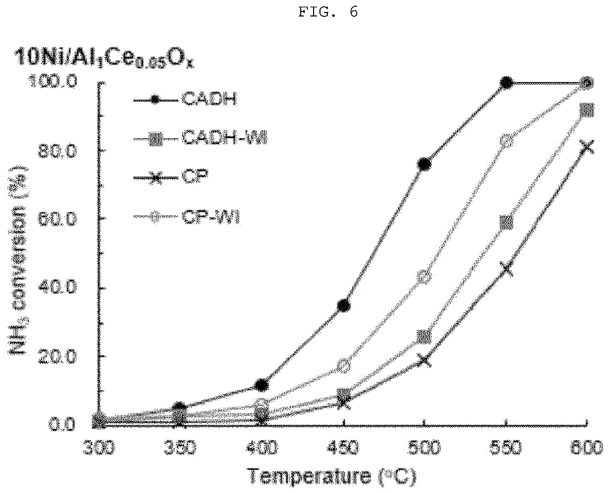

Thereafter, ammonia decomposition reactions were performed in the same manner as in Experimental Example 1, except for using the catalysts prepared above. The results thereof are shown in FIG. 6 and Table 4.

**[Table 4]**

| Method | Ammonia conversion (%) | | | | | | | Eₐₚₚ (kJ/mol) |
|---|---|---|---|---|---|---|---|---|
| | 300°C | 350°C | 400°C | 450°C | 500°C | 550°C | 600°C | |
| CADH | 1.25 | 4.85 | 11.79 | 34.94 | 76.03 | 100 | 100 | 74.72 |
| CADH-WI | 0.94 | 2.67 | 3.27 | 8.68 | 25.79 | 58.90 | 92.00 | 89.47 |
| CP | 0.91 | 1.17 | 1.21 | 6.45 | 19.09 | 45.37 | 80.95 | 90.21 |
| CP-WI | 1.80 | 2.58 | 6.23 | 17.26 | 43.29 | 82.97 | 100 | 80.23 |

Referring to FIG. 6 and Table 4, of all the 10Ni/Al₁Ce_{0.05}Oₓ catalysts prepared by various methods, the catalyst prepared by the CADH method showed the highest activity. Additionally, the performance was observed to be reduced in the case of the catalysts prepared by the methods in the following order: CP-WI, CADH-WI, and CP.

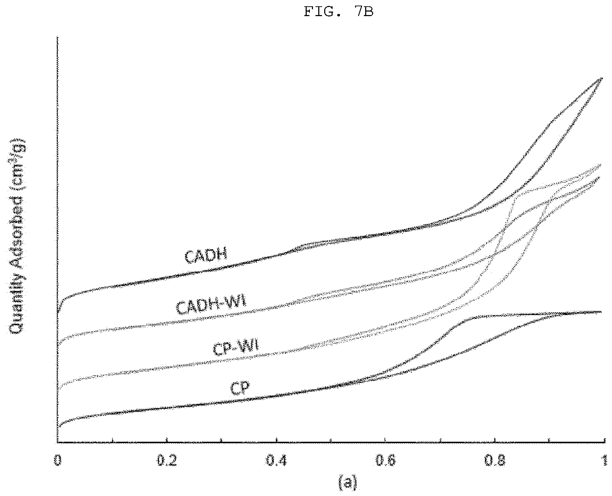

Additionally, the synthesis process has a significant impact on the pore structure of the catalyst, which is observable through changes in the shape of a hysteresis loop in the N₂ adsorption-desorption isotherm (see FIG. 7A).

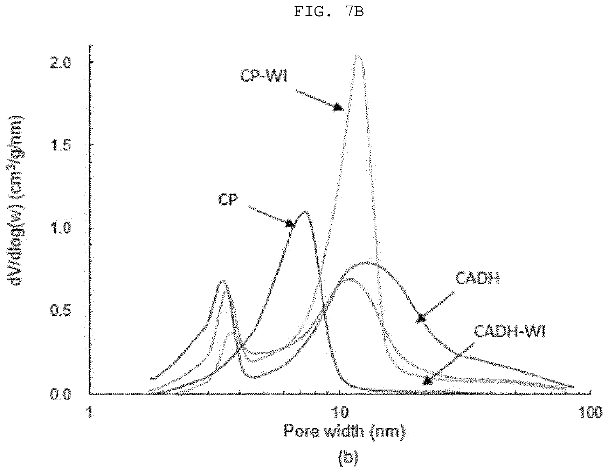

As shown in FIG. 7B, while the catalyst prepared by the CP method showed a relatively narrow pore size distribution (PSD) with a monomodal PSD centered around 7.0 nm, all the other catalysts showed bimodal PSD shapes, which became wider in the case of the CADH-based catalysts each independently centered around 3.5 nm and 14.0 nm.

The catalysts having a bimodal PSD structure have both macropores and mesopores and thus may be useful for ammonia decomposition. In this case, the gas diffusion rate may be improved by macropores, and the catalytic activity may be improved by mesopores.

### <Experimental Example 6: Impact of other catalyst preparation conditions>

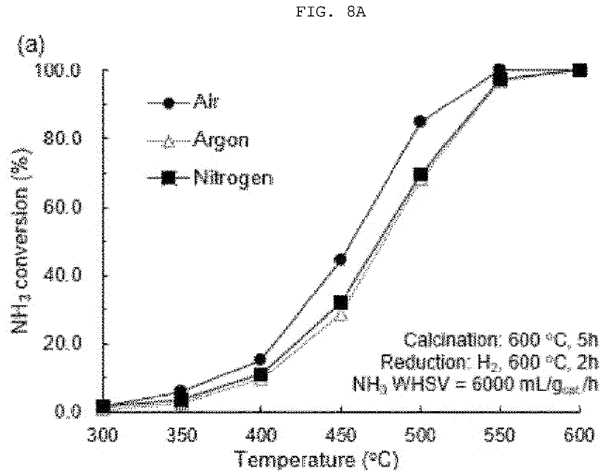

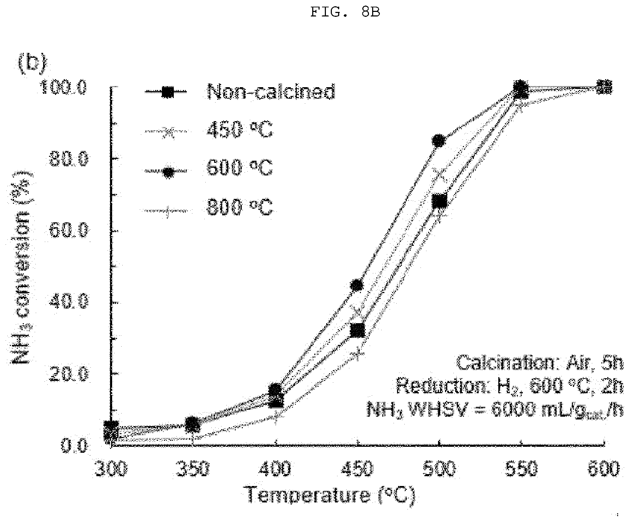

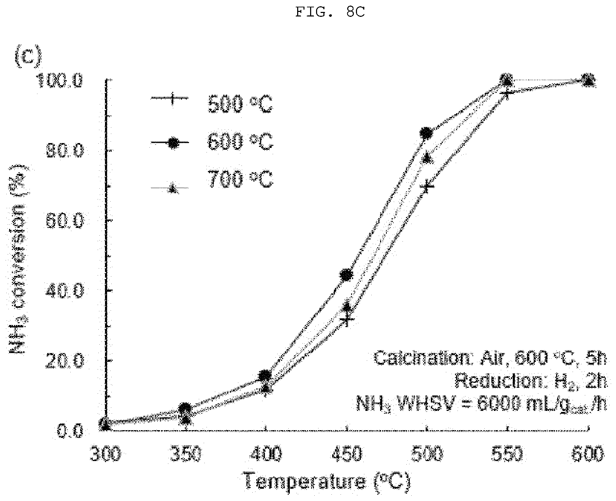

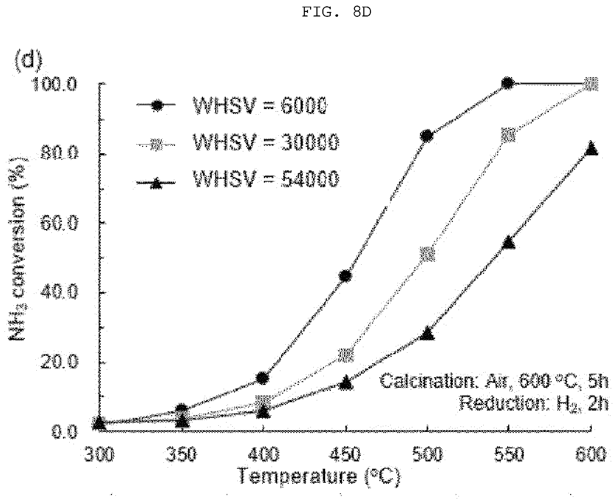

The impact of atmospheric gas, calcination temperature, reduction temperature, and GHSV during calcination of 20Ni/Al₁Ce_{0.05}Oₓ prepared by the CADH method, according to the present disclosure, is shown in FIG. 8.

The catalyst calcined in an air atmosphere showed better ammonia decomposition activity than other catalysts calcined in a nitrogen or argon atmosphere (see FIG. 8A).

While the calcination temperature was examined up to 800°C in an air atmosphere, the catalyst calcined at 600°C showed the best catalytic performance (see FIG. 8B).

The impact of reduction temperature was evaluated at 500°C, 600°C, and 700°C, and the optimal reduction temperature was found to be 600°C (see FIG. 8C).

FIG. 8D shows the impact of GHSV on ammonia conversion, which gradually decreases as GHSV increases from 6000 mL/gcat./h to 54000 mL/gcat./h.

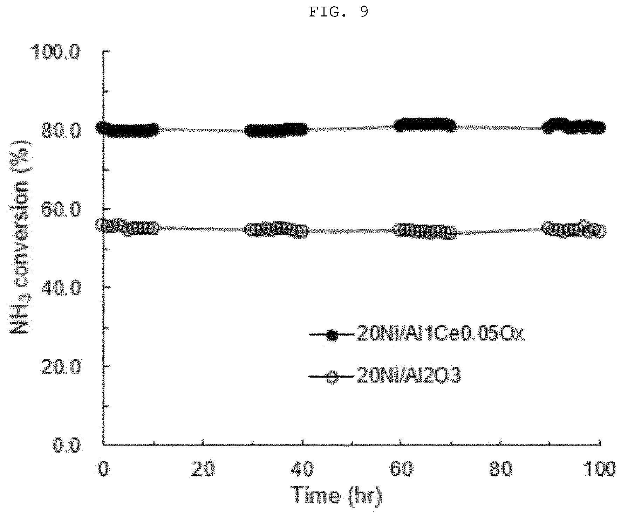

Additionally, to evaluate the long-term stability of the catalyst prepared by the CADH method (i.e., 20Ni/Al₂O₃ and 20Ni/Al₁Ce_{0.05}Oₓ), an experiment was conducted for 100 hours at 600°C at a GHSV of 54000 mL/gcat. The results thereof are shown in FIG. 9.

The ammonia conversion rates for 20Ni/Al₂O₃ and 20Ni/Al₁Ce_{0.05}Oₓ remained stable at about 80.0% and 55.0%, respectively, without any significant decrease over 100 hours. As described above, the catalyst prepared by the CADH method was shown to have excellent catalytic stability.

Specific aspects of the present disclosure have been described in detail above, and those skilled in the art will appreciate that these specific aspects are only preferred embodiments, and the scope of the present disclosure is not limited thereby. Thus, the substantial scope of the present disclosure will be defined by the appended claims and their equivalents.

## Claims

1. A method of preparing a catalyst for ammonia decomposition using cation-anion double hydrolysis, wherein a catalyst for ammonia decomposition to produce hydrogen, in which nickel (Ni) is supported on an aluminum composite oxide support, is prepared using a one-pot cation-anion double hydrolysis (CADH) method.

2. The method of claim 1, wherein the aluminum composite oxide support is doped with a promoter metal (M), and
the promoter metal (M) is one or more selected from among a lanthanum-based metal, yttrium (Y), manganese (Mn), or magnesium (Mg).

3. The method of claim 2, wherein a molar ratio (M/Al) of the promoter metal (M) to aluminum (Al) is in a range of 0 to 0.2.

4. The method of claim 1, wherein a nickel (Ni) content in the ammonia catalyst is in a range of 10 to 60 wt%.

5. The method of claim 1, comprising:
(a) preparing a solution of a nickel precursor and an aluminum precursor;
(b) mixing the nickel precursor and the aluminum precursor, prepared in the (a), to prepare a mixed solution and then adjusting a pH value thereof using a pH adjuster;
(c) stirring the mixed solution prepared in the (b) while performing cation-anion double hydrolysis to obtain a precipitate;
(d) filtering, washing, and drying the precipitate obtained in the (c);
(e) calcining the precipitate dried in the (d); and
(f) reducing the precipitate calcined in the (e).

6. The method of claim 5, wherein in the (a), a promoter metal precursor is further prepared, and
in the (b), a mixed solution of the nickel precursor, the aluminum precursor, and the promoter metal precursor is prepared, and a pH value thereof is adjusted, wherein the promoter metal (M) is one or more selected from among cerium (Ce), lanthanum (La), yttrium (Y), manganese (Mn), or magnesium (Mg).

7. The method of claim 5 or 6, wherein the calcining in the (e) is performed in an air atmosphere.

8. The method of claim 5 or 6, wherein the calcining in the (e) is performed in a temperature range of 450°C to 600°C.

9. The method of claim 5 or 6, wherein the reducing in the (f) is performed in a temperature range of 500°C to 700°C.

10. A catalyst for an ammonia decomposition reaction, the catalyst prepared by a one-pot cation-anion double hydrolysis (CADH) method and represented by a formula of Ni/AlMₐOₓ
(where in the formula, M is selected from among a lanthanide metal, yttrium (Y), manganese (Mn), or magnesium (Mg), and a is in a range of 0 to 0.2).

11. The catalyst of claim 10, wherein a Ni content is in a range of 10 to 60 wt%.

12. A method of producing hydrogen by ammonia decomposition using the catalyst of claim 10.
